# EUROPEAN PATENT APPLICATION

(11) **EP 1 724 963 A2**
(43) Date of publication of application: **22.11.2006**
(21) Application number: 05023143.0
(22) Date of filing: 24.10.2005
(51) Int. Cl.: H04L 9/08

(54) **Data processing apparatus**

(30) Priority: 08.02.2005 JP 2005031915
(71) Applicant: KABUSHIKI KAISHA TOSHIBA, Tokyo 105-8001 (JP)
(72) Inventor: Ohno, Katsuya, Minato-ku Tokyo 105-8001 (JP)
(74) Representative: HOFFMANN EITLE

(57) **Abstract**

A data encryption processor (12) encrypts a data set received from a controller (11) in accordance with a predetermined encryption algorithm, and generates a data set in which encrypted data C is inserted into a data area, and encrypted data B is inserted into a padding area. The data encryption processor (12) passes the encrypted data set to a data recording processor (13). The data recording processor (13) records the data set passed from the data encryption processor (12) in a data recording unit (14) under the control of the controller (11).

## Description

The present invention relates to a data processing apparatus, which handle data whose secrecy must be maintained.

A data encryption technique is applied to various data processing apparatuses which handle data whose secrecy must be maintained. For example, when information is recorded on a recording medium such as an optical disk, it is required to record information after it is encrypted. In a copyright protection method, content as a work are encrypted using an encryption key to obtain encrypted content, and the encryption key used in encryption is encrypted using another encryption key to obtain an encrypted key so as to keep it secret. The encrypted key and encrypted content are recorded on a recording medium together, thus preventing an unauthorized copy.

In such data encryption technique, upon encrypting and storing data, the data must be adjusted to a block size of an encryption algorithm. Conventionally, a padding area used to match data with the block size of the encryption algorithm is embedded with padding data of a predetermined bit sequence (e.g., all zeros).

As a conventional apparatus technique that handles data whose secrecy must be kept, for example, as disclosed in Japanese Pat. Appln. KOKAI Publication No. 2001-318600, a message authentication technique that inserts key data into a padding area of a message data block is known.

However, conventionally, in every data encryption process and decryption process of the encrypted data, advanced arithmetic processing is required.

The present invention has been made in consideration of the above situation, and has as its object to provide a data processing apparatus, which can efficiently execute encryption processing and decryption processing.

According to an embodiment of the present invention, there is disclosed a data processing apparatus which handles a data set including first data, at least one second data calculated from the first data, and third data having an one-to-one correspondence with the second data. This data processing apparatus comprises: a data set generation unit configured to generate an encrypted data set by encrypting the second and third data by associating the third data with the second data; and a recording unit configured to record the encrypted data set generated by the data set generation unit.

According to the present invention, encryption processing and decryption processing can be efficiently executed by taking the aforementioned steps.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing the structure of a data set according to an embodiment of the present invention;
FIG. 2 is a view showing an example of an encrypted data set according to the embodiment of the present invention;
FIG. 3 is a block diagram showing a data set encryption processor and its peripheral components of a data processing apparatus according to the embodiment of the present invention;
FIG. 4 is a flowchart showing the processing sequence of the data processing apparatus shown in FIG. 3;
FIG. 5 is a block diagram showing a data set decryption processor and its peripheral components of a data processing apparatus according to the embodiment of the present invention;
FIG. 6 is a flowchart showing the processing sequence of the data processing apparatus shown in FIG. 5;
FIG. 7 is a flowchart showing the processing sequence of the data processing apparatus shown in FIG. 5;
FIG. 8 is a block diagram showing an example of the arrangement of a data recording apparatus and data playback apparatus according to the embodiment of the present invention; and
FIG. 9 is a flowchart showing the processing sequence of the data recording apparatus and data playback apparatus shown in FIG. 8.

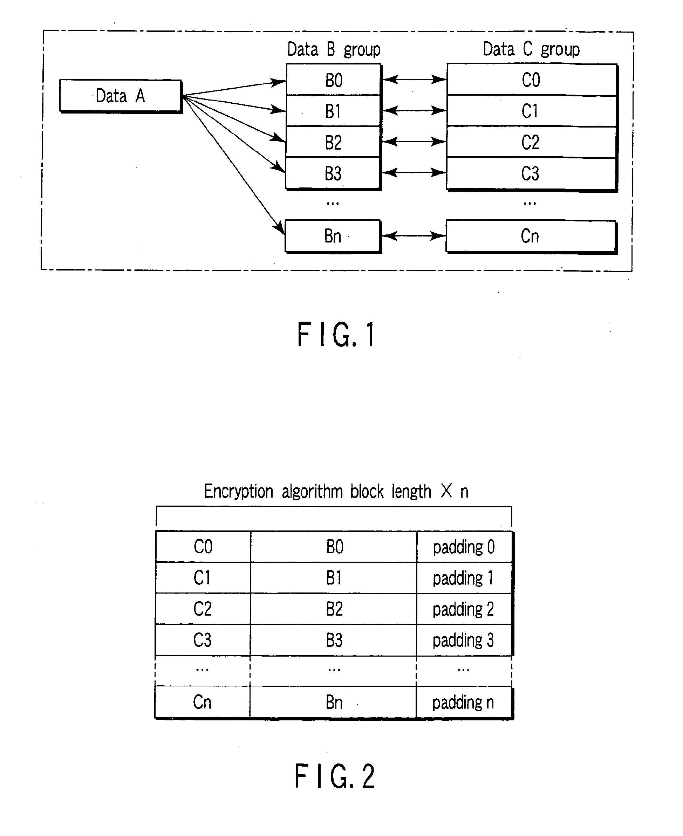

FIG. 1 shows the structure of a data set to be handled by the present invention. This data set includes first data, at least one second data calculated based on this first data, and third data which has an one-to-one correspondence with the second data. In FIG. 1, the first data is indicated by data A, the second data is indicated by data B, and the third data is indicated by data C. In the structure shown in FIG. 1, (n+1) data B (B0, B1, ..., Bn) are calculated from one data A as a data B group. Unique data C (C0, C1, ..., Cn) are provided in correspondence with the data (B0, B1, ..., Bn) of this data B group. These (n+1) data C (C0, C1, ..., Cn) are key data used to encrypt or decrypt predetermined data (e.g., audiovisual content data and the like) which is to be encrypted and must be kept secret. Data B (B0, B1, ..., Bn) indicate the coordinates of corresponding data C (C0, C1, ..., Cn), and are required when data C are used.

In the data sets with the data structure shown in FIG. 1, data A (one or a plurality of data) and data (C0, C1, ..., Cn) of a data C group corresponding to this data are saved in advance as, e.g., a management data file at a predetermined storage location on a system. Or these data are externally given and are saved at the predetermined storage location. The data (B0, B1, ..., Bn) of the data B group are acquired by applying arithmetic processing to the data A.

Upon encrypting the respective data (C0, C1, ..., Cn) of the data C group and storing them on a predetermined recording medium, their data size must be adjusted to a block size of an encryption algorithm. In the embodiment of the present invention, the data B is embedded in a padding area for this size adjustment. The data B embedded in this padding area is encrypted in correspondence with the data C. The size of this encrypted data set is an integer multiple of the block size of the encryption algorithm.

FIG. 2 shows an example of the data structure of the data set in which data B is embedded in each padding area. FIG. 2 shows an example of the structure of the data set when data B and parity data are partially embedded in the padding area in place of known padding data (all zeros).

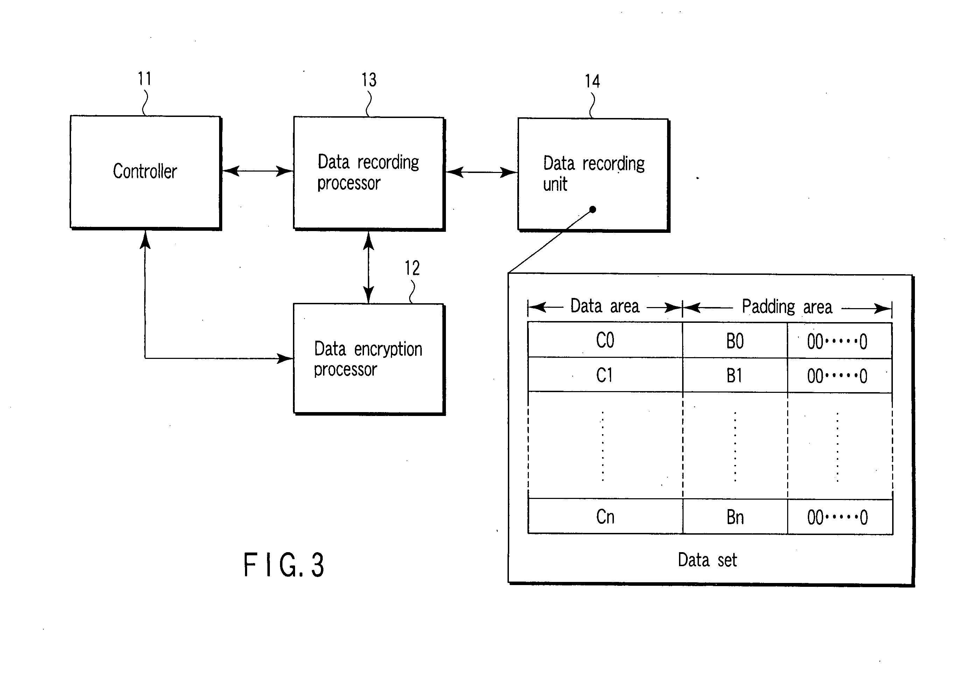

FIG. 3 shows an example of the arrangement of a data processing apparatus which generates an encrypted data set by embedding the data B in each padding area and encrypting that data set together with the corresponding data C. The data processing apparatus shown in FIG. 3 comprises a controller 11, data encryption processor 12, data recording processor 13, and data recording unit 14. The controller 11 controls the overall apparatus. The data encryption processor 12 executes processing for embedding data B in a padding area of a data set, and encrypting the data set together with corresponding data C under the control of the controller 11. The data recording processor 13 executes processing for recording the data set encrypted by the data encryption processor 12 in the data recording unit 14 under the control of the controller 11.

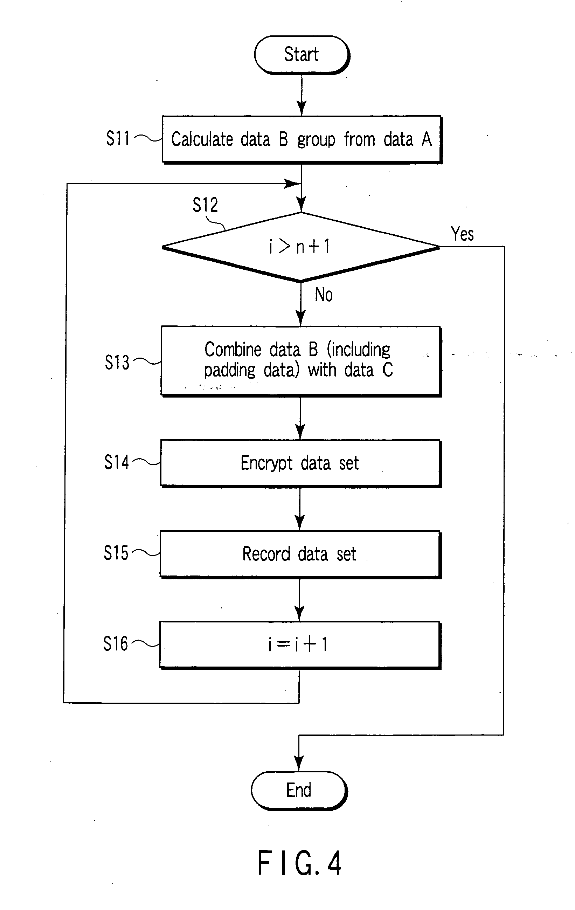

FIG. 4 shows the processing sequence of this data processing apparatus. The controller 11 acquires data A and a data C group corresponding to this data A as elements of the data set shown in FIG. 1 from a predetermined data storage unit or the like on the system. Furthermore, the controller 11 calculates data (B0, B1, ..., Bn) of a data B group corresponding to data (C0, C1, ..., Cn) of the data C group from the acquired data A (step S11).

For each of the calculated data (B0, B1, ..., Bn) of the data B group, data B of interest and data C corresponding to the data B of interest are combined (step S13), and the controller 11 passes this data set to the data encryption processor 12. The data encryption processor 12 encrypts the data set received from the controller 11 in accordance with a predetermined encryption algorithm, inserts the encrypted data C into a data area, and inserts the encrypted data B into a padding area (step S14). With this processing, data encryption processor 12 generates a data set having a size as an integer multiple of the block size of the encryption algorithm. The data encryption processor 12 passes this encrypted data set to the data recording processor 13. The data recording processor 13 records the data set passed from the data encryption processor 12 in the data recording unit 14 under the control of the controller 11 (step S15). This processing is repeated for each of the data (B0, B1, ..., Bn) of the data B group (steps S12 and S16). As a result, (n+1) encrypted data sets shown in FIG. 2 are recorded in the data recording unit 14.

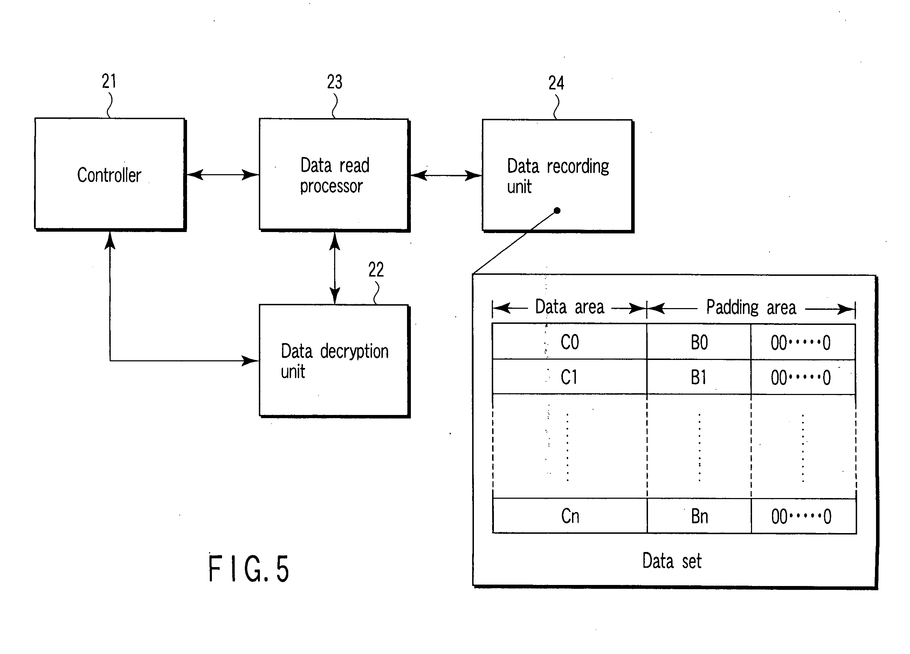

FIG. 5 shows an example of the arrangement of a data processing apparatus which decrypts the encrypted data sets with the structure shown in FIG. 2, and uses decrypted data B and C in subsequent processing. The data processing apparatus shown in FIG. 5 comprises a controller 21, data decryption unit 22, data read processor 23, and data recording unit 24. The data recording unit 24 stores (n+1) encrypted data sets with the structure shown in FIG. 2. The controller 21 controls the overall apparatus. The data read processor 23 reads an encrypted data set one by one from the data recording unit 24 under the control of the controller 21. The data decryption unit 22 decrypts the data set read by the data read processor 23 under the control of the controller 21.

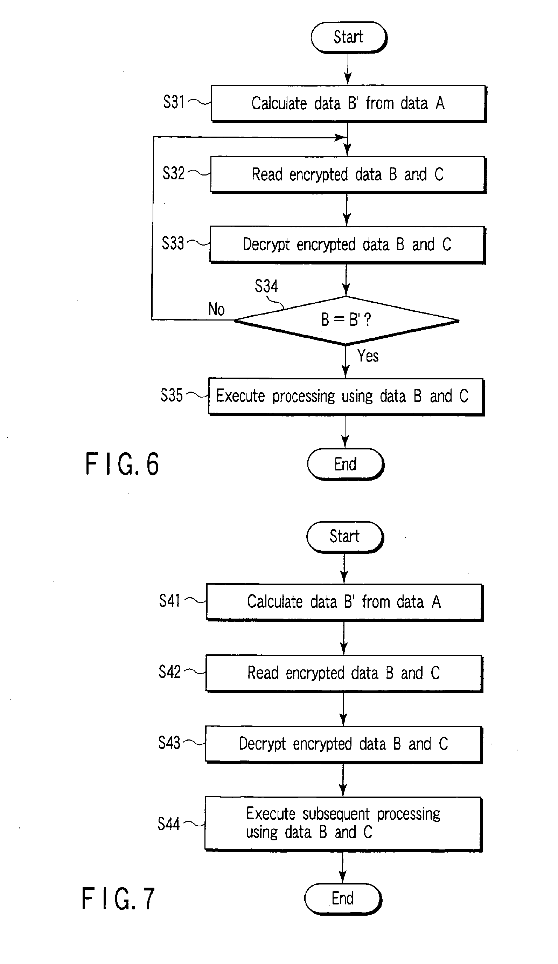

FIG. 6 shows the processing sequence of this data processing apparatus.

The controller 21 calculates data B' corresponding to one data B in the data B group on the basis of data A shown in FIG. 1 and a predetermined decryption condition (step S31).

The data read processor 23 reads one of (n+1) data sets recorded in the data recording unit 24 under the control of the controller 21, and passes the read data set to the data decryption unit 22 (step S32). The data decryption unit 22 decrypts the data set received from the data read processor 23 under the control of the controller 21 (step S33). The data decryption unit 22 compares the decrypted data B with the data B' (step S34). If the data B matches the data B' (YES in step S34), data decryption unit 22 executes subsequent processing using the decrypted data B and C (step S35).

For example, key data used to encrypt or decrypt predetermined data (e.g., content data) is generated using data C (decrypted simultaneously with data B) corresponding to the data B, and encryption or decryption processing is executed using this key data. In the processing in step S35, data B indicating the coordinates of data C can be obtained simultaneously with decryption of the data C without being calculated from data A. Upon comparison between the decrypted data B and the data B' (step S34), if the data B does not match the data B' (NO in step S34), the next data set is read from the (n+1) data sets recorded in the data recording unit 24 to repeat the aforementioned processing.

FIG. 7 shows another processing sequence of the data processing apparatus shown in FIG. 5. The processing shown in FIG. 7 is effective when respective data (B0 B1, ..., Bn) of the data B group are associated with the storage addresses of the data recording unit 24.

The controller 21 calculates the storage address of data B to be used on the basis of data A shown in FIG. 1 and a predetermined decryption condition, and passes it as data B' to the data read processor 23 (step S41).

The data read processor 23 reads one data set stored at the storage address indicated by the data B' from the (n+1) data sets recorded in the data recording unit 24 in accordance with the data B' received from the controller 21 under the control of the controller 21, and passes it to the data decryption unit 22 (step S42). The data decryption unit 22 decrypts the data set passed from the data read processor 23 under the control of the controller 21 (step S43), and executes subsequent process using the decrypted data B and C (step S44). For example, key data used to encrypt or decrypt predetermined data (e.g., content data) is generated using data C (decrypted simultaneously with data B) corresponding to the data B, and encryption or decryption processing is executed using this key data. In the processing in step S44, data B indicating the coordinates of data C can be obtained simultaneously with decryption of the data C without being calculated from data A.

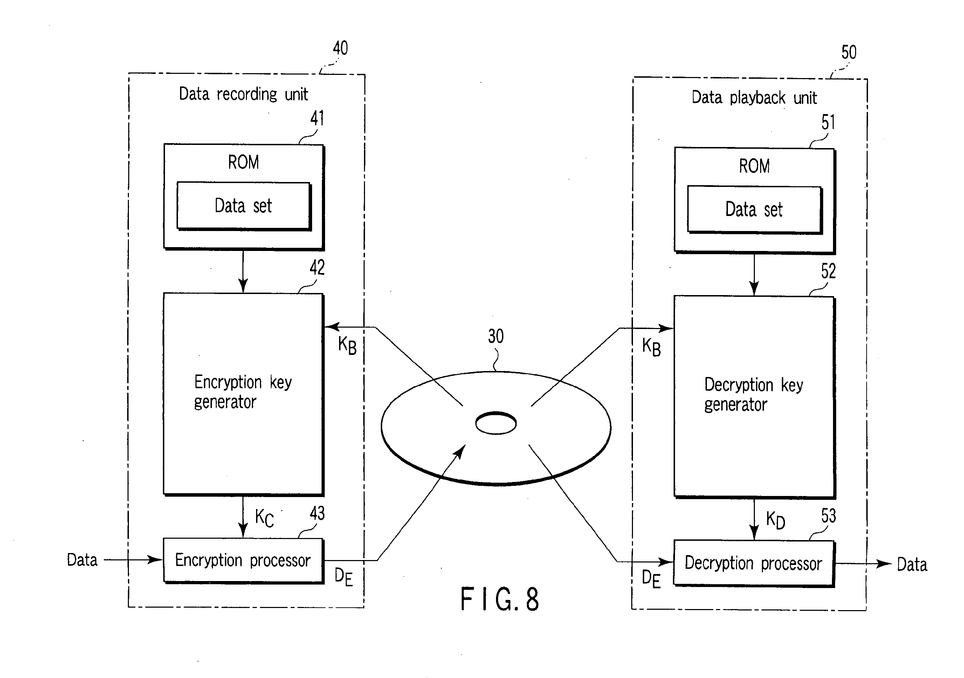

FIG. 8 shows an example of the arrangement of a data recording apparatus and data playback apparatus using the data sets with the data structure shown in FIG. 2. Note that a data recording unit 40 as a building component of the data recording apparatus and a data playback unit 50 as a building component of the data playback apparatus are illustrated on the identical figure. However, the data recording apparatus need only be provided with the data recording unit 40, and the data playback apparatus need only be provided with the data playback unit 50.

The data recording unit 40 has a ROM 41 which stores data sets with the data structure shown in FIG. 2, an encryption key generator 42 which generates an encryption key using each data set stored in the ROM 41, and an encryption processor 43 which encrypts content data (DATA) to be recorded on a recording medium 30 such as an optical disk or the like using the encryption key generated by the encryption key generator 42.

The data playback unit 50 has a ROM 51 which stores data sets with the data structure shown in FIG. 2, a decryption key generator 52 which generates a decryption key using each data set stored in the ROM 51, and a decryption processor 53 which decrypts encrypted content data (DATA) read from the recording medium 30 using the decryption key generated by the decryption key generator 52.

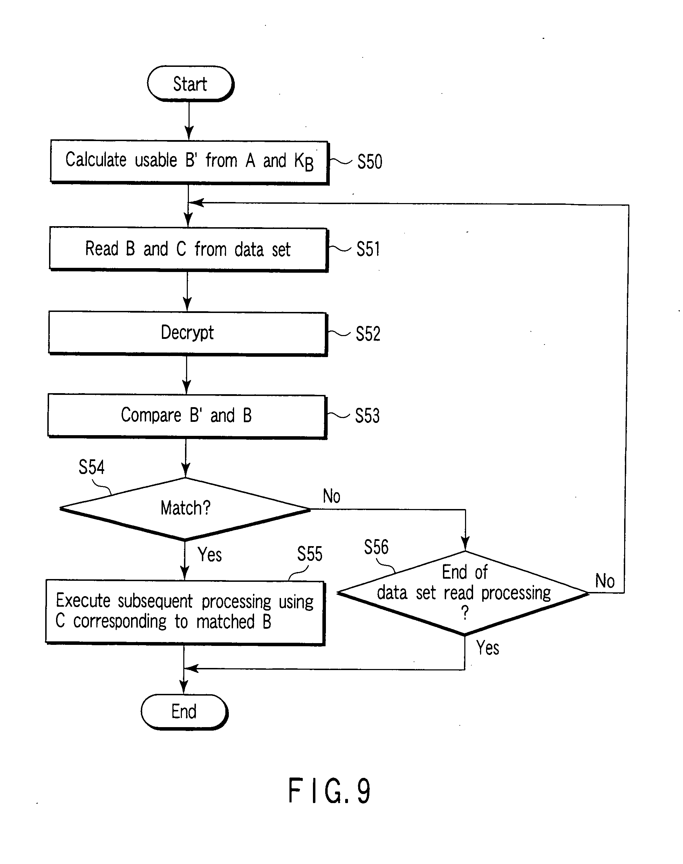

FIG. 9 shows the processing sequence of the data recording unit 40 and the data playback unit 50 with the above arrangement.

The encryption key generator 42 of the data recording unit 40 reads key data K_{B} recorded on the recording medium 30 from it, and calculates data B' corresponding to one data B of the data B group on the basis of this key data K_{B} and data A shown in FIG. 1 (step S50). Then, one data set is read from the ROM 51 (step S51) and is decrypted (step S52). The decrypted data B is compared with the data B' (step S53). If the data B matches the data B' (YES in step S54), the subsequent processing is executed using the decrypted data B and C (step S55). In this case, an encryption key K_{C} is generated using the data C corresponding to the data B, and is passed to the encryption processor 43. The encryption processor 43 encrypts content data (DATA) to be recorded on the recording medium 30 using the encryption key K_{C} received from the encryption key generator 42. This encrypted content data (D_{E}) is recorded on the recording medium 30 by a drive (not shown) which drives the recording medium 30.

Upon comparison between the decrypted data B and the data B' (step S53), if these data do not match (NO in step S54), the next data set is read from the ROM 41 and the same processing as described above is executed. In this case, if (n+1) data sets have already been read, and data B do not match data B' (NO in step S54), the processing ends without generating any encryption key K_{C} (YES in step S56).

The encryption key generator 52 of the data recording unit 50 reads key data K_{B} recorded on the recording medium 30 from it, and calculates data B' corresponding to one data B of the data B group on the basis of this key data K_{B} and data A shown in FIG. 1 (step S50). Then, one data set is read from the ROM 51 (step S51) and is decrypted (step S52). The decrypted data B is compared with the data B' (step S53). If the data B matches the data B' (YES in step S54), the subsequent processing is executed using the decrypted data B and C (step S55). In this case, a decryption key K_{D} is generated using the data C corresponding to the data B, and is passed to the decryption processor 53. The decryption processor 53 decrypts encrypted content data (D_{E}) read from the recording medium 30 using the decryption key K_{D} received from the decryption key generator 52, and outputs the decrypted content data (DATA) to a data playback apparatus (not shown).

In the processing of the decryption key generator 52 as well, upon comparison between the decrypted data B and the data B' (step S53), if these data do not match (NO in step S54), the next data set is read from the ROM 51 and the same processing as described above is executed. In this case, if (n+1) data sets have already been read, and data B do not match data B' (NO in step S54), the processing ends without generating any decryption key K_{D} (YES in step S56).

Note that the apparatus which can use data sets according to the present invention is not limited to the aforementioned data recording apparatus and data playback apparatus. Also, the present invention can also be applied to various other apparatuses and systems such as a communication apparatus and the like which must keep data secret.

## Claims

1. A data processing apparatus which handles a data set including first data (A), at least one second data (B) calculated from the first data, and third data (C) having an one-to-one correspondence with the second data, **characterized by** comprising:
a data set generation unit (12) configured to generate an encrypted data set by encrypting the second and third data by associating the third data with the second data; and
a recording unit (13) configured to record the encrypted data set generated by the data set generation unit.

2. An apparatus according to claim 1, **characterized in that** the data set generation unit generates the encrypted data set using a predetermined number of block sizes having, as a unit, a block size of an encryption algorithm used in the encryption.

3. An apparatus according to claim 2, **characterized in that** the encrypted data set has a padding area, and the second data is embedded in the padding area.

4. An apparatus according to claim 3, **characterized in that** the third data is data to be kept secret as an object to be encrypted, and the second data is data indispensable to use the third data.

5. An apparatus according to claim 4, **characterized in that** the third data is key data, and the second data is data indicating coordinates of the key data.

6. An apparatus according to claim 1, **characterized by** further comprising:
a recording medium (24) configured to record the encrypted data set;
a decryption unit (22) configured to read the encrypted data set from the recording medium, and decrypt the read data set; and
an inspection unit (22) configured to compare the second data decrypted by the decryption unit and the second data calculated from the first data and verify if the decrypted data set includes authentic data.

7. An apparatus according to claim 1, **characterized by** further comprising:
a recording medium (24) configured to record the encrypted data set;
a decryption unit (22) configured to read the encrypted data set from the recording medium, and decrypt the read data set; and
a processing unit (22) configured to execute subsequent processing using the second and third data decrypted by the decryption unit.
